# EUROPÄISCHE PATENTSCHRIFT

(11) **EP 2 790 269 B1**
(45) Veröffentlichungstag und Bekanntmachung des Hinweises auf die Patenterteilung: **18.03.2015**
(21) Anmeldenummer: 13163461.0
(22) Anmeldetag: 12.04.2013
(51) Int. Cl.: H01Q 9/04

(54) **Antenne**
Antenna
Antenne

(43) Veröffentlichungstag der Anmeldung: 15.10.2014
(73) Patentinhaber: SICK AG, 79183 Waldkirch (DE)
(72) Erfinder: Pudenz, Florian, 22049 Hamburg (DE)
(74) Vertreter: Hehl, Ulrich

(56) Entgegenhaltungen:
- EP-A1- 1 667 282
- WO-A1-2004/010535
- WO-A1-2004/049501
- WO-A1-2011/159262
- US-B2- 7 239 283

## Beschreibung

Die Erfindung betrifft eine Antenne, insbesondere eine Patchantenne, mit einem flächenartigen Resonatorelement nach dem Oberbegriff von Anspruch 1 sowie ein entsprechendes Verfahren zum Aussenden und/oder Empfangen von elektromagnetischen Signalen.

Eine derartige Antenne wird beispielsweise in einem RFID-Lesesystem (Radio Frequency Identification) benötigt. Solche RFID-Lesesysteme dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Dies führt zu schnellen und nachvollziehbaren Logistikbewegungen. Die erfassten Informationen werden verwendet, um die Weiterleitung und Sortierung von Gütern und Produkten zu steuern. Wichtige Anwendungen für die automatische Identifikation sind logistische Verteilerzentren, etwa von Paketversendern, oder die Gepäckaufgabe in Flughäfen.

Ein häufiger Einsatzort eines RFID-Lesesystems ist die Montage an einem Förderband, auf dem die Waren gefördert werden, oder in einem sogenannten Leseportal. Darunter ist ein beliebiger Durchgang zu verstehen, welcher mit einem oder mehreren RFID-Lesern und möglicherweise weiteren Sensoren ausgestattet ist. Objekte werden mittels eines Förderbandes, eines Transportfahrzeugs, wie ein Gabelstapler, oder auch von Hand durch das Leseportal bewegt und dabei anhand ihres RFID-Transponders identifiziert.

RFID-Transponder können prinzipiell aktiv sein, also eine eigene Energieversorgung aufweisen, oder passiv ausgeführt sein. Unabhängig davon, ob es sich um aktive oder passive Komponenten handelt, sind RFID Transponder die nach dem Backscatter Prinzip arbeiten dadurch charakterisiert, dass sie das Sendesignal des Lesegerätes reflektieren und dabei durch Modulation in der Amplitude verändern. Sie erzeugen dabei kein eigenes Hochfrequenzsignal. In der Praxis eignen sich aktive Transponder für die Logistik aber weniger, weil durch die Energieversorgung die Stückpreise solcher Transponder nicht das für den Massenmarkt erforderliche geringe Niveau erreichen können. Deshalb werden zumeist passive Transponder ohne eigene Energieversorgung eingesetzt. In beiden Fällen wird durch elektromagnetische Strahlung des Lesegerätes der Transponder zur Abstrahlung der gespeicherten Information angeregt, wobei passive Transponder die notwendige Energie aus der Sendeenergie des Lesesystems beziehen. In dem etablierten Ultrahochfrequenzstandard (UHF) ISO 18000-6 werden passive Transponder nach dem Backscatter-Verfahren ausgelesen.

Da ein Großteil der verfügbaren Transponder linear polarisiert ist und die Ausrichtung des Transponders zur Antenne des Lesegerätes in vielen Applikationen nicht eindeutig definiert werden kann, werden bevorzugt zirkular polarisierte Antennen für den Einsatz in RFID Lesegeräten verwendet.

Damit ein Gerät wie ein RFID-Lesesystem, das elektromagnetische Wellen sendet und empfängt, möglichst kompakt aufgebaut werden kann, besteht der Wunsch nach entsprechend kompakten Antennen. Dabei hängt die benötigte Antennengröße von der Frequenz ab. Diese wiederum ist kein freier Parameter, da beispielsweise für UHF ein Frequenzbereich zwischen 850 MHz und 950 MHz vorgesehen ist, innerhalb dessen länderspezifisch bestimmte Frequenzen genutzt werden.

Zur Verringerung der Antennengröße für einen bestimmten Frequenzbereich sind im Stand der Technik mehrere Möglichkeiten bekannt. Zum einen kann der Resonator, also das eigentliche Antennenelement, mit einem Material mit höherer dielektrischer Konstante umhüllt werden. Das führt aber zu zusätzlichen Antennenverlusten und einer Verringerung der Bandbreite.

Alternativ sind geometrische Veränderungen der Antennenstruktur denkbar. Eine bekannte Antennenfamilie nach diesem Ansatz sind die Fraktalantennen, die beispielsweise in der US 6 127 977 oder der US 7 148 850 beschrieben werden. Anders als bei herkömmlichen Patchantennen wird der Resonator hier nicht einfach als vollflächige Metallplatte ausgebildet, sondern als fraktale Struktur. Wie bei einem Fraktal üblich, wird also ein selbstwiederholendes Muster erzeugt, indem eine geometrische Erzeugende ausgewählt wird, deren Muster sich je nach Ordnung des Fraktals auf dem Antennenpatch in verschiedenen Positionen, Orientierungen und Skalen wiederholt. Dadurch verlängert sich der Umfang des Antennenpatches erheblich, wird in mathematischer Idealisierung sogar unendlich lang. Das derart fein verästelte Fraktal ermöglicht zwar den Aufbau einer kompakten Antenne, hat aber den Nachteil, dass die Bandbreite der Antenne sehr deutlich abnimmt, weil der umschlossene leitfähige Bereich zu klein wird.

Aus der Arbeit von D. T. Notis et al, "Dual polarized microstrip patch antenna, reduced in size by use of peripheral slits," 7th European Conference on Wireless Technology, 12.10.2004, Seiten 273-276, ist bekannt, die Kanten einer Patchantenne mit Schlitzen zu versehen, um die Patchgröße zu verringern. Die damit erzielbare Verkleinerung reicht aber in der Praxis noch nicht aus.

Aus der WO 2004/010535 A1 ist eine Patchantenne bekannt, deren Form auf einer fraktalen Geometrie beruht. In einer Ausführungsform wird ein flächenfüllender Patch auf Basis der bekannten Koch-Kurve verwendet, der somit an seinem Außenumfang Strukturen ähnlich der Gestalt von Schneeflocken aufweist. Eine ähnliche Antennenstruktur ist auch aus der WO 2011/159262 A1 bekannt.

Eine Antenne gemäß US 7 239 283 B2 weist an einem spitz zulaufenden Ende mehrere sich logarithmisch vergrößernde Einkerbungen auf.

In einer Mehrbandantenne nach WO 2004/049501 A1 sind zwei elektrisch miteinander verbundene Patchelemente mit Schlitzen dazwischen vorgesehen.

Die EP 1 667 282 A1 befasst sich mit einer Antenne, bei welcher die abstrahlenden Elemente auf der Oberseite eines Gehäuseteils und eben mit diesem ausgebildet sind. Diese abstrahlenden Elemente können als Buchstaben oder Ziffern gestaltet sein.

Es ist daher Aufgabe der Erfindung, eine möglichst kompakte Antennenform zu finden.

Diese Aufgabe wird durch eine Antenne mit einem flächenartigen Resonatorelement nach Anspruch 1 sowie ein entsprechendes Verfahren zum Aussenden und/oder Empfangen von elektromagnetischen Signalen gelöst. Dabei geht die Erfindung von dem Grundgedanken aus, den Umfang des flächenartigen Resonatorelements zu vergrößern. Diese Verlängerung geschieht in zwei Richtungen einerseits durch Schlitze, die nach Innen hin Material des Resonatorelements wegnehmen und andererseits durch Vorsprünge, die dem Resonatorelement nach außen hin Material hinzufügen.

Bei der Antenne handelt es sich insbesondere um eine Patchantenne. Das Resonatorelement, im Falle einer Patchantenne als Patch bezeichnet, weist eine dünne, leitende Materialschicht auf, in der Regel eine Metallfläche. In einer Draufsicht bildet das Resonatorelement als Ganzes eine einfache Geometrie, die sich durch ein Mehreck oder Polygon mit wenigen Ecken beschreiben lässt, etwa ein Viereck, ein Sechseck oder dergleichen. Dieser einfachen Grundform sind die Schlitze und Vorsprünge überlagert, wobei aber die polygonale Geometrie insgesamt erhalten bleibt. Ein derart mit Schlitzen und Vorsprüngen versehenes Polygon unterscheidet sich deutlich von einem Fraktal. Es fehlt an einer Erzeugenden, an einer Iteration der Anwendung dieser Erzeugenden in höhere Ordnungen und an einer Selbstähnlichkeit auf unterschiedlichen Skalen. Bei einer Fraktalantenne wird auch die Grundgeometrie durch das Fraktal vorgegeben und ist somit keineswegs durch ein Polygon beschreibbar. Dies wirkt sich auf den um schlossenen leitfähigen Bereich und damit die Bandbreite aus. Alternativ kann das Resonatorelement auch als Aussparung in einer metallischen Fläche als Schlitzstrahler beziehungsweise Schlitzantenne ausgeführt sein.

Die Erfindung hat den Vorteil, dass eine sehr kleine Bauform für die Antenne ermöglicht wird. Zugleich bleibt die Bandbreite höher als beispielsweise bei Fraktalantennen. Dadurch können Antennen mit größerer Bandbreite realisiert werden.

Ein Schlitz und/oder ein Vorsprung bilden jeweils ein Muster in Form eines Schriftzuges. Der Schlitz oder Vorsprung ist damit in sich strukturiert und nicht lediglich ein gerader Schlitz beziehungsweise gerader Vorsprung. Dadurch wird der Umfang des Resonatorelements in einem noch größeren Maße verlängert. Ein weiterer Vorteil der gefalteten Schlitzstruktur besteht darin, dass gefaltete Schlitze weiter in den Eckbereichen der Struktur positioniert werden können. Auf diese Weise können an den Außenkanten einer Patchstruktur zusätzliche oder längere Schlitzelemente positioniert werden, ohne dass es zu Überschneidungen mit Schlitzelementen einer angrenzenden Kante kommt.

Das Muster ist bevorzugt eine mehrfach in sich gefaltete Struktur. Der Schlitz beziehungsweise Vorsprung erstreckt sich also in beiden Richtungen der Fläche des Resonatorelements und umfasst dazu mehrere Wellen, Kurven, Abzweigungen oder dergleichen. Das Muster ist vorzugsweise eindimensional, also gleichsam in einem Strich gezogen. In diesem Zusammenhang soll eindimensional natürlich nicht in einem mathematischen Sinn verstanden werden, sondern eine gewisse Breite verbleiben, die jedoch zu keinen flächigen Elementen innerhalb des Musters führt.

Ein Vorsprung setzt vorzugsweise jeweils das Muster eines Schlitzes nach außen hin fort. Das gleiche ließe sich auch umgekehrt formulieren, im Ergebnis bilden Schlitz und Vorsprung jedenfalls gemeinsam ein Muster. Dies gilt vorzugsweise für alle Schlitze und Vorsprünge, die somit in gleicher Zahl vorhanden und einander zugeordnet sind. Alternativ können aber die Vorsprünge und Schlitze auch teilweise oder insgesamt jeweils eigene Muster bilden.

Die Kanten weisen das von Schlitzen und/oder Vorsprüngen gebildete Muster vorzugsweise mehrfach auf. Es gibt somit ein Grundmuster, welches an der gesamten Kante oder einem Kantenabschnitt durch die Schlitze und/oder Vorsprünge wiederholt wird. Die Muster sind dabei vorzugsweise äquidistant zueinander angeordnet.

Längs einer Kante ist bevorzugt ein jeweils diesseits einer Kantenmitte wiederholtes Muster gegenüber einem jenseits der Kantenmitte wiederholten Muster an einer Senkrechten zu der Kante gespiegelt. Bei Antennen für Aussendung und Empfang von zirkular polarisierten Wellen gilt dies vorzugsweise nicht nur für ein oder einige der Muster, sondern für alle. Wenn man also gedanklich eine Symmetrieachse senkrecht zu der Kante durch deren Mittelpunkt zieht, so werden die Muster oberhalb dieser Symmetrieachse in die Muster unterhalb der Symmetrieachse gespiegelt. Dazu müssen die Muster entsprechend der geforderten Symmetrie je nach Lage zur Kantenmitte gespiegelt ausgeführt und weiterhin bezüglich der Kantenmitte mit passendem Abstand angeordnet werden. Dies führt zu symmetrischen Antenneneigenschaften. Das einzelne Muster selbst ist dabei vorzugsweise nicht symmetrisch, also insbesondere nicht durch Achsen- oder Punktspiegelung in sich selbst überführbar. Dadurch erhält man sich mehr Freiheiten bei der Gestaltung des Musters.

Das Muster ist bevorzugt senkrecht zu der jeweiligen Kante ausgebildet. Es gibt also eine Hauptrichtung der Schlitze und Vorsprünge, die dem Muster eine Orientierung geben, die senkrecht zu der Kante ausgerichtet ist. Dieser Hauptrichtung überlagern sich die feineren Musterstrukturen. Die Muster sind damit auf dem Resonatorelement, je nachdem an welcher Kante sie angeordnet sind, gegeneinander verkippt.

Ein Schriftzug ist ein Beispiel für ein Muster, welches mehrfach in sich gefaltet ist und eine Hauptrichtung aufweist. Es ist auch häufig möglich, ein solches Muster eindimensional auszubilden, also gleichsam in einem Strich zu erzeugen. Durch die Ausprägung als Schriftzug wird sehr leicht erkennbar, ob das Muster korrekt an den Kanten angebracht wurde. Da die Antenne regelmäßig von außen zugänglich angebracht ist, bleibt der Schriftzug auch im Betrieb sichtbar und ermöglicht so eine Kontrolle auf Beschädigungen der Antenne. Das Muster ist noch bevorzugter ein Logo, beispielsweise ein Firmenlogo. Dies ist ein Beispiel für einen leicht wiedererkennbaren Schriftzug.

Das Resonatorelement weist bevorzugt an mindestens einer Ecke eine Abschrägung auf. Insbesondere können an mehreren Ecken Abschrägungen unterschiedlicher Größe vorgesehen sein. Wenn beispielsweise das Resonatorelement insgesamt eine rechteckige Geometrie aufweist, so werden in einer Ausführungsform zwei gegenüberliegende Ecken abgeschrägt. Dieses Abschrägen kann in unterschiedlicher Weise erfolgen, wobei also an einer Ecke mehr abgeschnitten wird als an der anderen. Dadurch erhält man zusätzliche Freiheitsgrade, um die Antenneneigenschaften anzupassen, beispielsweise um die zirkulare Polarisation einer Antenne zu verbessern oder nicht symmetrische Eigenschaften eines Gehäuses oder anderer die Antenne beeinflussender Bauelemente auszugleichen.

Das Polygon ist vorzugsweise ein Rechteck, dessen Ausdehnung in der einen Richtung die Ausdehnung in dazu senkrechter Richtung um weniger als fünf Prozent, zwei Prozent oder ein Prozent übertrifft. Die Abweichung von einem Quadrat bleibt also gezielt sehr klein, beispielsweise in einer Größenordnung von etwa 0,5 mm auf eine Kantenlänge von etwa 100 mm. Dadurch erhält man erneut einen Freiheitsgrad beim Antennendesign, um Symmetrieeigenschaften zu brechen oder Antenneneigenschaften unter Fremdeinflüssen wieder zu symmetrisieren. Ein Quadrat ist aber als alternatives Polygon auch denkbar.

Das Polygon weist vorzugsweise an mindestens einer Kante eine Einbuchtung auf. Dadurch wird die Grundform des Resonatorelements angepasst. Prinzipiell ist auch ein Polygon mit Einbuchtungen an den Kanten ein Polygon. Hier ist also gemeint, dass eine einfache konvexe Grundform durch Einbuchtung an mindestens einer oder sogar allen Kanten aufgebrochen wird. Ein von den Schlitzen und Vorsprüngen gebildetes Muster wird vorzugsweise nur im Bereich der Einbuchtung angebracht.

In bevorzugter Weiterbildung ist eine RFID-Lesevorrichtung mit mindestens einer erfindungsgemäßen Antenne zum Senden von RFID-Signalen an einen RFID-Transponder und/oder zum Empfangen von RFID-Signalen von einem RFID-Transponder vorgesehen, wobei die RFID-Lesevorrichtung weiterhin eine Auswertungseinheit zum Eincodieren einer RFID-Information in die RFID-Signale und/oder zum Auslesen einer RFID-Information aus den RFID-Signalen aufweist. Die Antenne ermöglicht eine besonders kompakte Bauform der RFID-Lesevorrichtung, während sie weiterhin das benötigte Frequenzband beispielsweise im UHF-Bereich abdeckt. Eine solche RFID-Lesevorrichtung wird bevorzugt in stationärer Montage an einem Lesebereich eines Förderers oder eines Leseportals zum Auslesen mindestens eines auf dem Förderer oder durch das Leseportal bewegten RFID-Transponders eingesetzt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische dreidimensionale Übersichtsdarstellung des Einsatzes eines RFID-Lesers an einem Förderband;
- Fig. 2: eine Blockdarstellung eines RFID-Lesers;
- Fig. 3: eine Draufsicht auf das Resonatorelement eines Beispiels einer Antenne; und
- Fig. 4: eine Draufsicht auf das Resonatorelement einer Ausführungsform einer Antenne;
- Fig. 5: eine Draufsicht auf das Resonatorelement in einer Variante zu der in Figur 4 dargestellten Ausführungsform; und
- Fig. 6: eine Ausschnittsdarstellung eines einzelnen Musters des in Figur 4 und 5 dargestellten Resonatorelements.

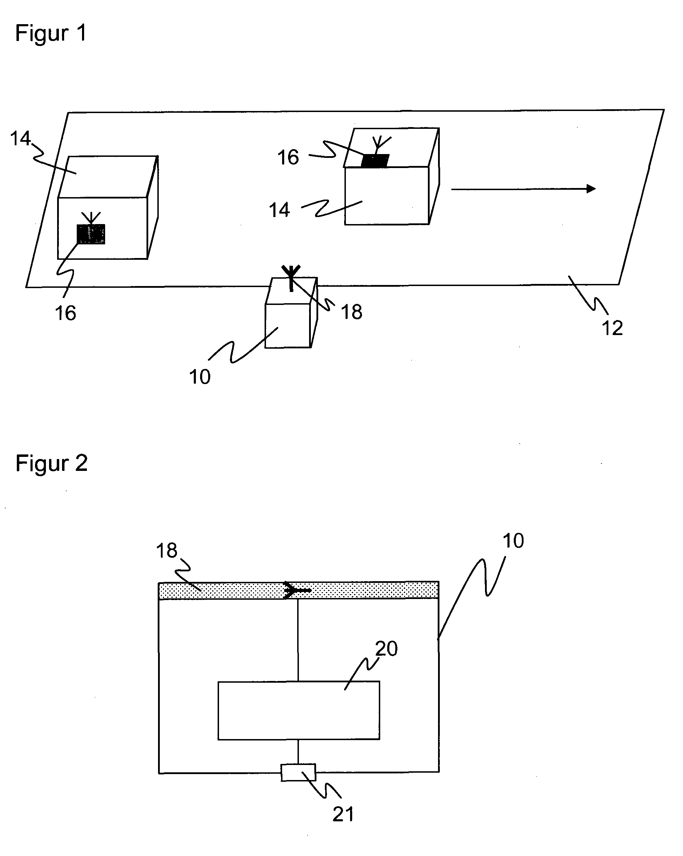

Figur 1 zeigt eine schematische Übersichtsdarstellung eines RFID-Lesers 10, der an einem Förderband 12 montiert ist. Objekte 14, die mit RFID-Transpondern 16 versehen sind, werden auf dem Förderband 12 an dem RFID-Leser 10 vorbeibewegt. Aufgabe des RFID-Lesers 10 ist, Signale von den RFID-Transpondern 16 zu empfangen, um eine darin gespeicherte Information auszulesen. Je nach Anwendung kann auch umgekehrt vorgesehen sein, dass der RFID-Leser 10 Informationen auf einem RFID-Transponder 16 ablegt.

Zu diesem Zweck weist der RFID-Leser 10 eine Lese-Empfangsantenne 18 zum Empfangen von RFID-Signalen auf. Die Antenne 18 kann außerdem als Sendeantenne für Schreibvorgänge auf einem RFID-Transponder 16 und zur Versorgung von RFID-Transpondern 16 mit einem Trägersignal verwendet werden. Alternativ ist hierfür eine nicht dargestellte separate Sendeantenne vorgesehen. Der genauere Aufbau eines RFID-Lesers 10 und eines Transponders 16 sowie deren Kommunikation untereinander sind dem Fachmann an sich bekannt und werden deshalb hier nicht näher erläutert.

Figur 2 zeigt den RFID-Leser 10 in einer sehr vereinfachten Blockdarstellung. Eine Steuer- und Auswertungseinheit 20 des RFID-Lesers 10 ist mit der Antenne 18 verbunden, um mittels der Antenne 18 empfangene RFID-Signale auszuwerten oder Informationen als RFID-Signale an einen Transponder zu senden. Die Steuer- und Auswertungseinheit 20 ist weiterhin mit einer drahtgebundenen oder drahtlosen Schnittstelle 21 verbunden, um Daten auszutauschen, Parametrierungen vorzunehmen und dergleichen.

Das gegenüber bekannten RFID-Lesern 10 verbesserte Element ist die Antenne 18, die in Figur 2 nur schematisch dargestellt ist. Die Antenne 18 wird vorzugsweise an zwei Punkten gespeist, um zirkular polarisierte Wellen auszusenden. Eine zirkulare Polarisation bei Speisung an lediglich einem oder an mehr als zwei Punkten kann jedoch auch realisiert werden. Auch eine entsprechende Antennenstruktur mit lediglich einem Speisepunkt für lineare Polarisation ist denkbar. Für eine einfache Herstellung wird die Antenne 18 weiterhin bevorzugt als Patchantenne ausgeführt, deren Resonator von einer dünne Metallschicht gebildet wird. Die Antenne 18 wurde im Zusammenhang mit dem Beispiel eines RFID-Lesers 10 eingeführt, kann aber auch in anderen Geräten eingesetzt werden.

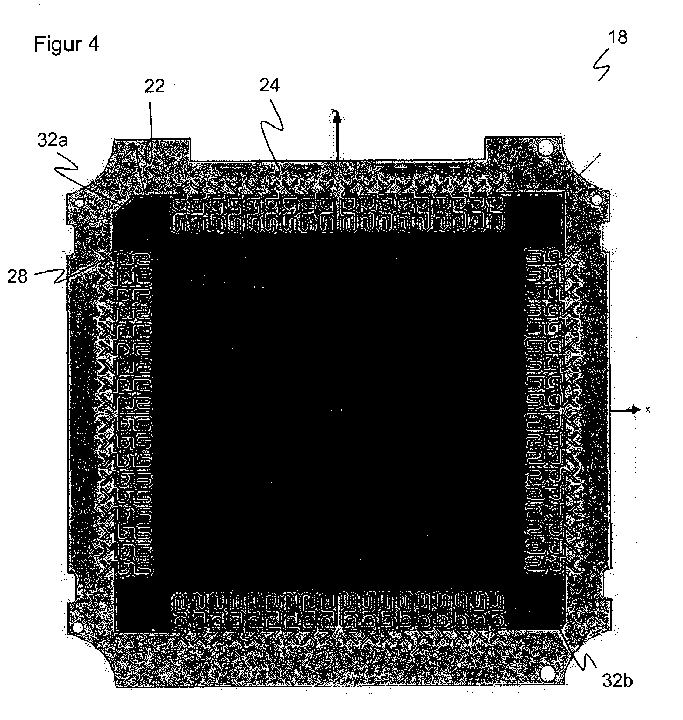

Die Figuren 4 bis 6 zeigen Draufsichten auf mehrere Ausführungsformen der Antenne 18 mit deren Resonator 22 ("Antennenpatch") auf einer Trägerplatine 24. Der Resonator 22 hat eine einfache polygonale Grundform, in den gezeigten Beispielen jeweils eines Rechtecks. An den Kanten wird die Außenkontur des Resonators 22 durch Schlitze 26 und Vorsprünge 28 verlängert. Allgemein ausgedrückt, wird die Kante dadurch wiederholt mit einem Muster gefaltet.

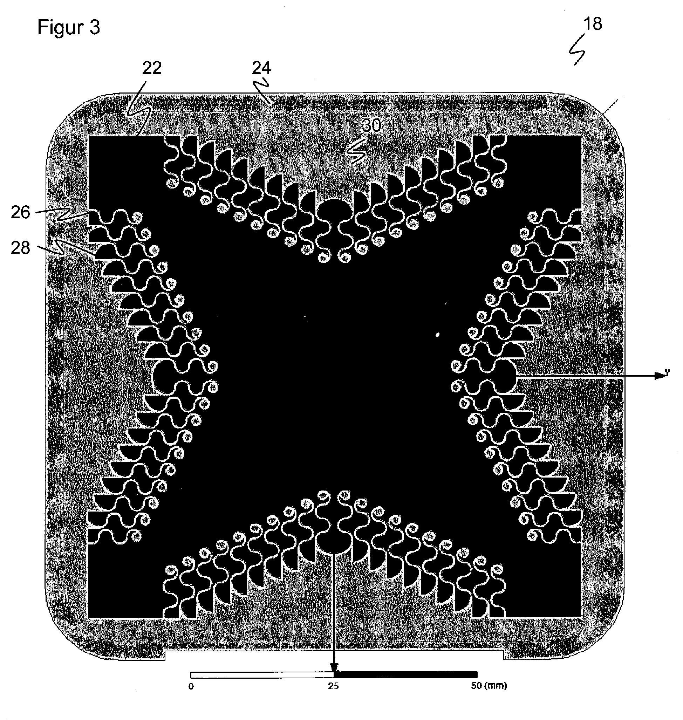

Figur 3 zeigt nicht beanspruchtes Beispiel des Resonators 22. Die rechteckige Grundform wird zunächst durch Einbuchtungen 30 modifiziert, wodurch die Außenkontur ein erstes Mal verlängert wird. Im Bereich der Einbuchtungen 30 sind die Kanten mit einem wiederholten Wellenmuster verlängert, welches jeweils einen wellenförmigen Schlitz 26 und einen die Welle nach außen hin fortsetzenden Vorsprung 28 aufweist. Das Muster könnte abweichend von der Darstellung ebenso auch außerhalb der Einbuchtungen 30 angebracht werden, sofern dafür genug Platz verbleibt.

Wie in der Figur 3 leicht zu erkennen, weist das Muster eine Vorzugsrichtung auf, die jeweils senkrecht zu der Kante der grundlegenden Rechteckform des Resonators 22 steht. Um diese Vorzugsrichtung variiert das Muster dann sozusagen in zweiter Ordnung durch mehrere Wellen. Die Muster sind zueinander identisch und äquidistant angebracht. Betrachtet man eine einzelne Kante des Resonators 22, so sind von der Mitte ausgehend die Muster in der einen Richtung gegenüber den Mustern in der anderen Richtung gespiegelt. Dadurch ergibt sich insgesamt eine Spiegelsymmetrie des Resonators 22 zu den zentralen Mittelachsen.

Das Wellenmuster der Figur 3 ist nur eines von unzähligen denkbaren Beispielen, wie aus Schlitzen 26 und Vorsprüngen 28 ein Muster gebildet werden kann. Die einfachste denkbare Ausführungsform wäre ein gerader Schlitz 26, der durch einen geraden Vorsprung 28 über die Kante hinaus verlängert wird. Vorzugsweise wird aber den Schlitzen 26 und Vorsprüngen 28 zusätzliche Struktur gegeben, indem Bögen, Kurven oder Abzweigungen hinzugefügt werden und so ein mehrfach in sich gefaltetes Muster entsteht, um die Außenkontur weiter zu verlängern. Für zirkular polarisierte Antennen ist es dabei vorteilhaft, wenn die Symmetrieeigenschaften gemäß Figur 3 erhalten bleiben, also die Muster untereinander gleich, bezüglich der jeweiligen Kantenmitte gespiegelt und äquidistant sind. Gleiche Muster erleichtern das Antennendesign und die Simulation der Antenneneigenschaften erheblich. Prinzipiell ist aber auch möglich, mit mehreren Mustern oder unterschiedlichen gegenseitigen Abständen der Muster zu arbeiten. Auch dabei sollte aber vorzugsweise die Symmetrie bezüglich der Hauptachsen erhalten bleiben.

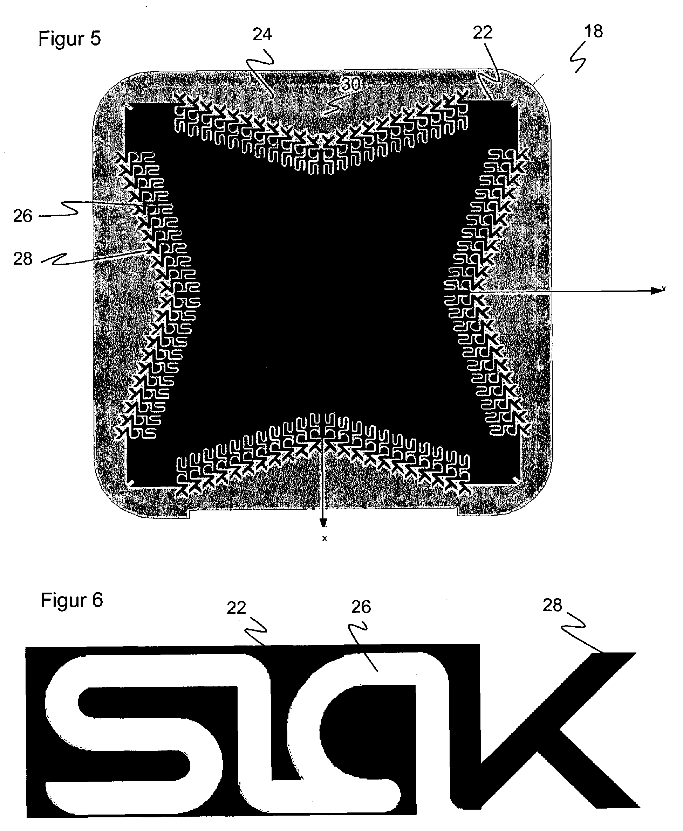

Figur 4 zeigt eine Ausführungsform der Antenne 18. Anstelle eines Wellenmusters wie in der Figur 3 bilden hier die Schlitze 26 und Vorsprünge 28 einen Schriftzug oder ein Logo. Als weiterer Unterschied zu der Ausführungsform der Figur 3 wird hier außerdem auf die Einbuchtungen 30 verzichtet. Eine Ausführungsform mit solchen Einbuchtungen 30 ist aber auch denkbar und in Figur 5 illustriert. Die grundsätzliche Anordnung mit mehrfacher äquidistanter Wiederholung des Schriftzugs, senkrechter Ausrichtung gegenüber der jeweiligen Kante und Spiegelung bezüglich der Kantenmitte entspricht derjenigen des Wellenmusters in Figur 3. Auch mit Schriftzügen sind Variationen denkbar, bei denen mehrere unterschiedliche Muster oder nicht äquidistante Abstände verwendet werden.

Figur 6 zeigt eine Ausschnittsvergrößerung eines einzelnen als Schriftzug ausgebildeten Musters. Ein Schriftzug bildet ebenso wie eine Welle ein Muster in Form einer mehrfach in sich gefalteten Struktur und verlängert damit die Außenkontur des Resonators 22 erheblich. Der Schriftzug hat den zusätzlichen Vorteil, dass das Auge ihn unmittelbar erfassen kann. Dadurch werden beispielsweise Beschädigungen des Resonators 22 sofort festgestellt. Der Schriftzug kann im Wesentlichen in einer Linie durchgezogen werden, jedoch auch Abzweigungspunkte aufweisen, um entsprechende Buchstaben wie das "K" zu bilden, und weist diverse Bögen und Ecken auf. Der durch Vorsprünge 28 gebildete Anteil des Schriftzugs ist gegenüber den Schlitzen 26 geringfügig um deren Breite versetzt, damit der Schlitz 26 nach außen offen beziehungsweise der Vorsprung 28 leitend mit dem Resonator 22 verbunden bleibt.

Es ist denkbar, gezielte Abweichungen von der Symmetrie des Resonators 22 anzubringen, beispielsweise um nicht symmetrische Einflüsse eines Gehäuses oder anderer Bestandteile des RFID-Lesers 10 auszugleichen. Eine derartige Maßnahme wird in Figur 4 illustriert, wo die linke obere Ecke und die rechte untere Ecke jeweils eine Abschrägung 32a-b aufweisen, die zudem einen unterschiedlich großen Eckbereich abschneiden. Eine weitere Maßnahme ist mit bloßem Auge nicht erkennbar und besteht darin, mit der Grundform des Resonators 22 minimal, d.h. um wenige Prozent oder sogar weniger als ein Prozent, von einem Quadrat abzuweichen. Der Resonator 22 wird also beispielsweise in X-Richtung geringfügig größer ausgebildet als in Y-Richtung

Mit Hilfe der aus Schlitzen 26 und Vorsprüngen 28 gebildeten Muster ist es möglich, die Fläche des Resonators 22 bei gleichem Frequenzbereich um mehr als die Hälfte zu reduzieren.

## Patentansprüche

1. Antenne (18), insbesondere Patchantenne, mit einem flächenartigen Resonatorelement (22), das die Geometrie eines Polygons mit mehreren Kanten aufweist, wobei das Resonatorelement (22) an den Kanten zu deren Verlängerung eine Vielzahl von Schlitzen (26) aufweist,wobei das Resonatorelement (22) zusätzlich an den Kanten eine Vielzahl von Vorsprüngen (28) aufweist,
**dadurch gekennzeichnet,**
**dass** ein Schlitz (26) und/oder ein Vorsprung (28) jeweils ein Muster in Form eines Schriftzuges bilden.

2. Antenne (18) nach Anspruch 1,
wobei das Muster (26, 28) eine mehrfach in sich gefaltete Struktur ist.

3. Antenne (18) nach Anspruch 1 oder 2,
wobei ein Vorsprung (28) jeweils das Muster (26, 28) eines Schlitzes (28) nach außen hin fortsetzt.

4. Antenne (18) nach einem der vorhergehenden Ansprüche,
wobei die Kanten das von Schlitzen (26) und/oder Vorsprüngen (28) gebildete Muster (26, 28) mehrfach aufweisen.

5. Antenne (18) nach Anspruch 4,
wobei längs einer Kante ein jeweils diesseits einer Kantenmitte wiederholtes Muster (26, 28) gegenüber einem jenseits der Kantenmitte wiederholten Muster (26, 28) an einer Senkrechten zu der Kante gespiegelt ist.

6. Antenne (18) nach einem der vorhergehenden Ansprüche,
wobei das Muster (26, 28) senkrecht zu der jeweiligen Kante ausgebildet ist.

7. Antenne (18) nach einem der vorhergehenden Ansprüche,
wobei das Muster (26, 28) ein Logo ist.

8. Antenne (18) nach einem der vorhergehenden Ansprüche,
wobei das Resonatorelement (22) an mindestens einer Ecke eine Abschrägung (32a-b) aufweist.

9. Antenne (18) nach einem der vorhergehenden Ansprüche,
wobei das Polygon ein Rechteck ist, dessen Ausdehnung in der einen Richtung die Ausdehnung in dazu senkrechter Richtung um weniger als fünf Prozent, zwei Prozent oder ein Prozent übertrifft.

10. Antenne (18) nach einem der vorhergehenden Ansprüche,
wobei das Polygon an mindestens einer Kante eine Einbuchtung (30) aufweist.

11. RFID-Lesevorrichtung (10) mit mindestens einer Antenne (18) nach einem der vorhergehenden Ansprüche zum Senden von RFID-Signalen an einen RFID-Transponder (16) und/oder zum Empfangen von RFID-Signalen von einem RFID-Transponder (16) und mit einer Auswertungseinheit (20) zum Eincodieren einer RFID-Information in die RFID-Signale und/oder zum Auslesen einer RFID-Information aus den RFID-Signalen.

12. RFID-Lesevorrichtung (10) nach Anspruch 11 für die stationäre Montage an einem Lesebereich eines Förderers (12) oder eines Leseportals zum Auslesen mindestens eines auf dem Förderer (12) oder durch das Leseportal bewegten RFID-Transponders (16).

13. Verfahren zum Aussenden und/oder Empfangen von elektromagnetischen Signalen, insbesondere RFID-Signalen, mit einer Antenne (18) nach einem der Ansprüche 1 bis 10.

## Claims

1. An antenna (18), in particular a patch antenna, having a planar resonator element (22) which has the geometry of a polygon with a plurality of edges, wherein the resonator element (22) has a plurality of slots (26) at the edges for their extension, wherein the resonator element (22) additionally has a plurality of projections (28) at the edges,
**characterized in that** a slot (26) and / or a projection (28) respectively form a pattern in the shape of lettering.

2. The antenna (18) in accordance with claim 1,
wherein the pattern (26, 28) is a structure folded into itself multiple times.

3. The antenna (18) in accordance with claim 1 or 2,
wherein a projection (28) respectively continues the pattern (26, 28) of a slot (28) toward the exterior.

4. The antenna (18) in accordance with any of the preceding claims, wherein the edges have the pattern (26, 28) formed by slots (26) and/or projections (28) in multiple form.

5. The antenna (18) in accordance with claim 4,
wherein a pattern (26, 28) respectively repeated at the one side of an edge center is mirrored along an edge with respect to a pattern (26, 28) mirrored at a perpendicular to the edge at the other side of the edge center.

6. The antenna (18) in accordance with any of the preceding claims, wherein the pattern (26, 28) is formed perpendicular to the respective edge.

7. The antenna (18) in accordance with any of the preceding claims, wherein the pattern (26, 28) is a logo.

8. The antenna (18) in accordance with any of the preceding claims, wherein the resonator element (22) has a chamfer (32a-b) at least at one corner.

9. The antenna (18) in accordance with any of the preceding claims, wherein the polygon is a rectangle whose extent in the one direction exceeds the extent in the direction perpendicular thereto by less than one of five percent, two percent and one percent.

10. The antenna (18) in accordance with any of the preceding claims, wherein the polygon has an indentation (30) at at least one edge.

11. An RFID reading apparatus (10) having at least one antenna (18) according to any of the preceding claims for transmitting RFID signals to an RFID transponder (16) and/or for receiving RFID signals from an RFID transponder (16) and having an evaluation unit (20) for encoding RFID information into the RFID signals and/or reading RFID information from the RFID signals.

12. An RFID reading apparatus (10) in accordance with claim 11 for the stationary installation at one of a reading zone of a conveyor (12) and a reading portal for reading out at least one RFID transponder (16) moved on the conveyor (12) or through the reading portal.

13. A method of transmitting and/or receiving electromagnetic signals, in particular RFID signals, using an antenna (18) according to any of claims 1 to 10.

## Revendications

1. Antenne (18), en particulier antenne dite "patch", comprenant un élément résonateur surfacique (22), qui présente la géométrie d'un polygone avec plusieurs côtés, dans laquelle l'élément résonateur (22) comporte au niveau des côtés en vue de les prolonger une pluralité de fentes (26), dans laquelle l'élément résonateur (22) comporte en outre une pluralité de saillies (28) au niveau des côtés,
**caractérisé en ce que**
une fente (26) et/ou une saillie (28) forment respectivement un motif sous la forme d'une écriture.

2. Antenne (18) selon la revendication 1,
dans laquelle le motif (26, 28) est une structure repliée plusieurs fois sur elle-même.

3. Antenne (18) selon la revendication 1 ou 2,
dans laquelle une saillie (28) prolonge respectivement le motif (26, 28) d'une fente (28) vers l'extérieur.

4. Antenne (18) selon l'une des revendications précédentes,
dans laquelle les côtés comportent plusieurs fois le motif (26, 28) formé par des fentes (26) et/ou des saillies (28).

5. Antenne (18) selon la revendication 4,
dans laquelle, le long d'un côté, un motif (26, 28) qui se répète respectivement en-deçà du milieu d'un côté est symétrique par rapport à un motif (26, 28) qui se répète au-delà du milieu du côté, au niveau d'une perpendiculaire au côté.

6. Antenne (18) selon l'une des revendications précédentes,
dans laquelle le motif (26, 28) est formé perpendiculairement au côté respectif.

7. Antenne (18) selon l'une des revendications précédentes,
dans laquelle le motif (26, 28) est un logo.

8. Antenne (18) selon l'une des revendications précédentes,
dans lequel l'élément résonateur (22) comporte un biseau (32a-b) au niveau d'au moins un coin.

9. Antenne (18) selon l'une des revendications précédentes,
dans laquelle le polygone est un rectangle, dont l'extension dans une direction dépasse l'extension dans une direction perpendiculaire à raison de moins de 5 %, 2 %, ou 1 %.

10. Antenne (18) selon l'une des revendications précédentes,
dans laquelle le polygone comporte un creux (30) au niveau d'au moins un côté.

11. Dispositif de lecture RFID (10) comprenant au moins une antenne (18) selon l'une des revendications précédentes pour émettre des signaux RFID vers un transpondeur RFID (16) et/ou pour recevoir des signaux RFID provenant d'un transpondeur RFID (16), et comprenant une unité d'évaluation (20) pour coder une information RFID dans les signaux RFID et/ou pour lire une information RFID à partir des signaux RFID.

12. Dispositif de lecture RFID (10) selon la revendication 11, pour le montage stationnaire sur une zone de lecture d'un convoyeur (12) ou d'un portique de lecture afin de lire au moins un transpondeur RFID (16) déplacé sur le convoyeur (12) ou à travers le portique de lecture.

13. Procédé pour émettre et/ou recevoir des signaux électromagnétiques, en particulier des signaux RFID, avec une antenne (18) selon l'une des revendications 1 à 10.
